# EUROPÄISCHE PATENTSCHRIFT

(11) **EP 3 164 312 B1**
(45) Veröffentlichungstag und Bekanntmachung des Hinweises auf die Patenterteilung: **18.07.2018**
(21) Anmeldenummer: 15725065.5
(22) Anmeldetag: 02.06.2015
(51) Int. Cl.: B61C 9/12, B61C 9/50, F16H 3/30

(54) **GETRIEBE FÜR DEN ANTRIEBSSTRANG EINES SCHIENENFAHRZEUGS**
TRANSMISSION FOR THE POWERTRAIN OF A RAIL VEHICLE
TRAIN D'ENGRENAGES POUR CHAÎNE CINÉMATIQUE D'UN VÉHICULE FERROVIAIRE

(30) Priorität: 04.07.2014 DE 102014213010
(43) Veröffentlichungstag der Anmeldung: 10.05.2017
(73) Patentinhaber: ZF Friedrichshafen AG, 88046 Friedrichshafen (DE)
(72) Erfinder: SACHER, Christoph, 88048 Friedrichshafen (DE)
(86) Internationale Anmeldenummer: PCT/EP2015/062247
(87) Internationale Veröffentlichungsnummer: WO 2016/000898

(56) Entgegenhaltungen:
- EP-A2- 2 251 223
- BE-A- 471 249
- CN-U- 201 712 606
- DE-A1-102011 011 867

## Beschreibung

Die Erfindung betrifft ein Radsatzgetriebe für den Antriebsstrang eines Schienenfahrzeugs, insbesondere eines elektrisch antreibbaren Triebzugs, sowie einen Antriebsstrang für ein Schienenfahrzeug.

Ein solches Radsatzgetriebe oder Antriebsstrang ist von der CN 201712606 U bekannt. Insbesondere in sogenannten Electrical Multiple Units, im Folgenden EMU genannt, werden bisher meist ein- oder zweistufige Stirnradgetriebe zur Übertragung der Antriebsleistung von einer elektrischen Antriebsmaschine auf die Radsatzwelle und die Antriebsräder verwendet. EMUs werden u.a. als Metro, U-Bahn oder Untergrundbahn in öffentlichen Verkehrssystemen eingesetzt. Als Metro bezeichnet man hierbei ein kreuzungsfreies System, welches unabhängig von anderen Verkehrssystemen und dem motorisierten Individualverkehr ist. Metro-Fahrzeuge sind fast ausschließlich elektrisch angetrieben. Ein als Triebwagen ausgebildetes Metro-Fahrzeug weist dabei zumindest eine mit einer elektrischen Antriebsmaschine gekoppelte angetriebene Achse auf, die auch Treibradsatz genannt wird. Daneben kann ein solcher Triebwagen auch eine oder mehrere nicht mit einer Antriebsmaschine gekoppelte Laufachsen aufweisen.

Aufgrund unterschiedlicher maximaler Betriebsgeschwindigkeiten, die bei Metrofahrzeugen in der Regel zwischen 60 km/h und 130 km/h betragen, und verschiedener Motorkonzepte variieren die Getriebeübersetzungen herkömmlich meist zwischen 6 und 12. In der Praxis verwendete Antriebsstränge von derartigen Schienenfahrzeugen weisen jedoch meist kein Schaltgetriebe bzw. Gangwechselgetriebe auf, d.h. der Antriebsstrang weist nur ein nicht veränderbares Übersetzungsverhältnis auf. Dies führt bisher zu der Notwendigkeit, dass je nach geforderter Übersetzung, die entsprechend der vorgesehenen maximalen Betriebsgeschwindigkeit gewählt wird, ein Getriebe aus einer Vielzahl von bevorrateten oder angebotenen Getriebevarianten verschiedener Größen und Übersetzungsverhältnissen ausgewählt und in das Schienenfahrzeug eingebaut wird. Die Hersteller solcher Schienenfahrzeuggetriebe bieten daher Getriebevarianten unterschiedlicher Größen an, bei welchen die Verwendung von Gleichteilen für die verschiedenen Getriebegrößen äußerst begrenzt ist. Dies erhöht die Herstellungs- und Lagerhaltungskosten sowohl für neue Getriebe als auch für Ersatzteile.

Die erforderlichen Geschwindigkeitsanpassungen des Schienenfahrzeugs und die Drehrichtungsumkehr zur Realisierung der Fahrtrichtungsumkehr werden durch die Drehzahlregelung und durch die Wahl der gewünschten Drehrichtung der elektrischen Antriebsmaschine vorgenommen. Dabei entstehen jedoch hohe Betriebskosten, weil die elektrische Antriebsmaschine und ggf. ein Wechselrichter meist nicht im optimalen Wirkungsgradbereich betrieben werden und dadurch ein hoher Energieverbrauch entsteht. Da elektrische Antriebsmaschinen im Gegensatz zu Verbrennungsmotoren zwei gleichwertige Drehrichtungen aufweisen, ist die Anordnung eines Wendegetriebes bei der Verwendung einer elektrischen Antriebsmaschine nicht erforderlich.

Die DE102011011867A1 offenbart ein Getriebe für den Antriebsstrang eines Schienenfahrzeugs, insbesondere eines Metro-Fahrzeugs, bei dem das Getriebe zwei hintereinander geschaltete Übersetzungsstufen aufweist. Das Getriebe weist dazu eine Eingangswelle, eine Zwischenwelle und eine Abtriebswelle auf. Die Abtriebswelle des Getriebes bildet dabei eine Radsatzwelle des Schienenfahrzeugs, auf der die beiden Radscheiben von Triebrädern des Schienenfahrzeugs verdrehfest befestigt sind. Daher wird ein derartiges Getriebe auch Radsatzgetriebe genannt. Dieses Getriebe soll einen großen Übersetzungsbereich abdecken, um dadurch die oben beschriebene, nachteilige Variantenvielfalt zu reduzieren. Durch konstruktive Modifikationen kann der Gesamtübersetzungsbereich weiter verändert werden.

Der vorliegenden Erfindung liegt die Aufgabe zugrunde ein Getriebe für den Antriebsstrang von Schienenfahrzeugen vorzuschlagen, mit dem ein zuverlässiger Betrieb bei geringen Betriebskosten in einem möglichst breiten Anwendungsbereich möglich ist. Zudem soll das Getriebe wegen des begrenzten Bauraumes im Unterbau eines Schienenfahrzeuges möglichst kleine Abmessungen haben.

Die Aufgabe wird durch ein Radsatzgetriebe gemäß dem Patentanspruch 1 und einen Antriebsstrang gemäß Anspruch 9 gelöst. Vorteilhafte Weiterbildungen der Erfindung gehen aus den jeweiligen Unteransprüchen hervor.

Es wird ein Radsatzgetriebe für den Antriebsstrang eines Schienenfahrzeugs vorgeschlagen. Der genannte Antriebsmotor ist bevorzugt ein Elektromotor, beispielsweise ein Asynchronmotor. Die zumindest zwei schaltbaren Übersetzungsstufen weisen betragsmäßig unterschiedliche Übersetzungsverhältnisse und dieselbe Drehrichtung auf, sodass das Schienenfahrzeug mit mindestens zwei Gängen für jede Fahrtrichtung ausgestattet ist.

Als Radsatzwelle wird im Schienenfahrzeugbau die Welle bezeichnet, auf der die beiden Radscheiben der jeweiligen Achse verdrehfest befestigt sind. Getriebe, die die Radsatzwelle zumindest teilweise mit umfassen, werden Radsatzgetriebe genannt. Demnach kann das hier vorgeschlagene Getriebe auch als schaltbares Radsatzgetriebe bezeichnet werden.

Die beiden schaltbaren Übersetzungsstufen ermöglichen einen Fahrbetrieb, bei dem der Antriebsmotor immer in einem günstigen Wirkungsgradbereich betrieben werden kann. Sowohl Verbrennungsmotoren als auch Elektromotoren lassen sich Wirkungsgradbereiche zuordnen, die sich abhängig von der jeweiligen Motordrehzahl verändern. Mit Hilfe der erfindungsgemäßen schaltbaren Getriebe im Antriebsstrang kann der Antriebsmotor daher in Drehzahlbereichen betrieben werden, in denen der Antriebsmotor einen günstigen Wirkungsgrad aufweist. So kann die Übersetzungsstufe mit dem größeren Übersetzungsverhältnis beispielsweise als Anfahrgang genutzt werden und ab einer bestimmten Fahrgeschwindigkeit wird regelmäßig in die andere Übersetzungsstufe geschaltet. Als Folge davon lassen sich die Betriebskosten des Schienenfahrzeuges deutlich senken.

Die beiden Übersetzungsstufen sind als ein erstes Stirnradpaar mit einem ersten und einem dritten Stirnrad und als ein zweites Stirnradpaar mit einem zweiten und einem vierten Stirnrad ausgebildet. Das erste und das zweite Stirnrad sind dabei jeweils verdrehfest auf der Eingangswelle und das dritte und das vierte Stirnrad sind jeweils rotierbar um eine Zwischenwellenachse angeordnet.

Ein Stirnrad, das verdrehfest auf einer Welle angeordnet ist wird auch als Festrad bezeichnet. Dagegen wird ein Stirnrad, das gegenüber der ihm zugeordneten Welle rotierbar angeordnet ist, als Losrad bezeichnet. Die Losräder in der bevorzugten Ausführung des Getriebes sind abhängig von der ausgewählten Übersetzungsstufe mit der Zwischenwelle verdrehfest verbindbar. Alternativ dazu kann die Anordnung der Losräder und Festräder in Bezug auf die Eingangswelle und die Zwischenwelle aber auch umgedreht werden, d.h. die Losräder können auch auf der Eingangswelle und die Festräder auf der Zwischenwelle angeordnet werden.

Unter einem Stirnrad ist ein gerad- oder schrägverzahntes Stirnzahnrad zu verstehen. Ein Stirnradpaar besteht aus zwei Stirnrädern, deren Stirnverzahnungen dauernd miteinander im Eingriff stehen. Es ist vorgesehen, dass das dritte und das vierte Stirnrad in Bezug auf ein Gehäuse des Getriebes auf jeweils einem gehäusefesten Lagerstutzen rotierbar gelagert sind. D.h. dass die Losräder des vorgeschlagenen Getriebes, das dritte und das vierte Stirnrad, zwar um die Zwischenwellenachse rotieren, aber nicht auf der Zwischenwelle gelagert sind. Dies ermöglicht eine stabile, dauerfeste und kompakte Ausführung der Lagerstellen für die Zwischenwelle und die beiden Losräder.

Die Schalteinrichtung umfasst vorzugsweise ein verdrehfest und axialverschiebbar in Bezug auf die Zwischenwelle gelagertes Schaltglied, das durch einen Aktuator der Schalteinrichtung derart axial verschiebbar ist, dass wahlweise das zweite Stirnrad oder das vierte Stirnrad verdrehfest mit der Zwischenwelle verbindbar ist.

Das Schaltglied kann als eine Schiebemuffe ausgeführt sein. Schiebemuffen sind als Teil von Schaltgetrieben dem Fachmann hinreichend bekannt. Um die Schaltungen komfortabler, d.h. ruckfreier zu gestalten kann an dem Schaltglied bzw. der Schiebemuffe eine an sich bekannte mechanische Synchronisierung ein oder beidseitig wirkend angeordnet sein.

Als Aktuator kann grundsätzlich ein pneumatisch, hydraulisch, elektromagnetisch oder elektromechanisch betätigter Aktuator verwendet werden. Vorzugsweise ist eine druckmittelbetätigte Zylinder-Kolben-Einheit vorgesehen, da Druckluft in Schienenfahrzeugen in der Regel bereits zur Verfügung steht und damit der Bereitstellungsaufwand minimal ist.

Des Weiteren kann die Schalteinrichtung zusätzlich zu den beiden Übersetzungsstufen eine Neutralstellung aufweisen, in der das zweite und das vierte Stirnrad frei rotierbar gegenüber der Zwischenwelle angeordnet sind, sodass der Kraftfluss zwischen der Eingangswelle und der Abtriebswelle unterbrochen ist. Im Zusammenhang mit der Neutralstellung kann an der Schalteinrichtung auch eine Notentriegelung vorgesehen sein, mit deren Hilfe im Fall eines Defektes an dem Antriebsstrang die Neutralstellung geschaltet werden kann. So kann beispielsweise eine durch einen defekten Antriebsstrang blockierte Radsatzwelle wieder in einen frei rotierbaren Zustand gebracht werden, sodass das Schienenfahrzeug abgeschleppt oder durch andere Antriebsstränge weiter betrieben werden kann.

Eine weiter bevorzugte Ausführung sieht vor, dass die Zwischenwelle als Hohlwelle mit einer axialen Bohrung ausgebildet ist, und dass das Schaltglied durch die Bohrung hindurch betätigbar ist. Die Betätigung des Schaltgliedes durch die Bohrung der Zwischenwelle ermöglicht einen sehr kompakten Aufbau des Getriebes.

Der Aktuator kann dazu an dem Gehäuse befestigt und über eine axialbeweglich durch die Zwischenwelle hindurchgeführte Schaltstange mit dem Schaltglied verbunden sein. Vorzugsweise ist der Aktuator als druckmittelbetätigte Zylinder-Kolben-Einheit ausgeführt, deren beweglicher Kolben mit der Schaltstange verbunden ist. Der Zylinder der Zylinder-Kolben-Einheit ist dabei beispielsweise außen an dem Gehäuse befestigt. Die durch die Bohrung in der Zwischenwelle hindurchgeführte Schaltstange kann bei Bedarf in der Bohrung zwischengelagert werden mittels eines Radiallagers, das Axialbewegungen der Schaltstange zulässt.

Eine zusätzliche Einsparung an Bauraum ist möglich, wenn der Aktuator fest mit der Zwischenwelle verbunden und zumindest teilweise in der Bohrung der Zwischenwelle angeordnet ist. Auf diese Weise kann der Aktuator noch weiter in der Zwischenwelle integriert und weiterer Bauraum eingespart werden. Dazu kann beispielsweise ein Teil der Bohrung direkt als Zylinderteil genutzt werden. Bei einer derartigen Ausführung kann das Betätigungsmedium, bspw. Druckluft, dem mit der Zwischenwelle rotierbaren Aktuator von einem gehäusefesten Teil über eine Drehdurchführung zugeführt werden.

Eine weitere bevorzugte Ausführung der Erfindung sieht eine Abtriebsstufe vor, die als drittes Stirnradpaar ausgebildet ist. Die Abtriebsstufe umfasst ein fünftes Stirnrad, das verdrehfest auf der Zwischenwelle angeordnet ist, und ein sechstes Stirnrad, das verdrehfest auf der Abtriebswelle angeordnet ist. Das dritte Stirnradpaar ist in Bezug auf das erste und das zweite Stirnradpaar auf der dem Antriebsmotor zugewandten Seite des Getriebes angeordnet. Diese motorzugewandte Anordnung der Abtriebsstufe schafft auf der gegenüberliegenden Getriebeseite im Bereich der zugeordneten Radscheibe Bauraum für eine Radscheibenbremse.

Schließlich umfasst die vorliegende Erfindung auch einen Antriebsstrang für ein Schienenfahrzeug. Gemäß einer ersten Alternative kann der Antriebsstrang demnach als teilabgefeder-ter Antrieb ausgeführt werden, bei dem der Antriebsmotor an einem Fahrzeugrahmen oder einem Drehgestell gelagert ist und bei dem das Getriebe sich auf der Radsatzwelle abstützt. Das Getriebe gehört somit zumindest teilweise zu der ungefederten Masse des Schienenfahrzeugs, während der Antriebsmotor zu der gefederten Masse zählt. In diesem Fall wird das Getriebe auch als achsreitendes Getriebe bezeichnet. Gemäß einer zweiten Alternative kann der Antriebsstrang durch eine federnde Komponente zwischen der Abtriebswelle und der Radsatzwelle auch als vollabgefederter Antrieb ausgeführt sein. Dabei sind der Antriebsmotor und das Getriebe direkt aneinander befestigt oder an einem gemeinsamen Rahmen oder Drehgestell des Schienenfahrzeuges befestigt. Die federnde Komponente umfasst vorzugsweise eine kardanische Kupplung, wie sie dem Fachmann beispielsweise aus den Schriften EP0698540A1 und EP2626580A2 bekannt ist. Dabei wird das Antriebsdrehmoment durch eine Hohlwelle auf die Radsatzwelle übertragen, wobei die Radsatzwelle durch die Hohlwelle hindurchgeführt ist. Ein solcher Antrieb wird deshalb auch Hohlwellenantrieb genannt.

Die Anordnung der einzelnen Komponenten in dem Antriebsstrang ist so gewählt, dass der Aktuator der Schalteinrichtung in der Umgebung der Wellenkupplung angeordnet ist, sodass die rotierende Wellenkupplung im Betrieb eine Luftströmung im Bereich des Aktuators erzeugt, wodurch der Aktuator gekühlt wird. Dies erhöht insbesondere bei Metrozügen mit einer hohen Schaltfrequenz und dadurch erhöhten Temperaturen an dem Aktuator die Lebensdauer des Aktuators. Das oben vorgeschlagene Getriebe ermöglicht zudem eine vorteilhafte Anordnung einer Radscheibenbremse im Bereich einer Radscheibe der Radsatzwelle. Diese sieht vor, dass die Radscheibenbremse in axialer und in radialer Richtung zumindest teilweise im Bereich der maximalen projizierten Abmessungen des Gehäuses des Getriebes angeordnet ist. Insbesondere durch die motorseitige Anordnung der Abtriebsstufe in dem Getriebe ergibt sich auf der Seite des Getriebes, die der Radscheibe zugewandt ist, zusätzlicher Bauraum in Form einer Ausnehmung auf der Außenseite des Gehäuses des Getriebes. Die Radscheibenbremse kann den Raum dieser Ausnehmung zumindest teilweise einnehmen.

Besonders geeignet für die Anwendung der vorliegenden Erfindung sind sogenannte Electrical-Multiple-Units (EMU), die aus einem oder mehreren Triebzügen bestehen.

Unter einem Triebzug ist in der Regel eine Einheit aus mehreren Schienenfahrzeugen oder Zugsegmenten zu verstehen. Dabei können ein Schienenfahrzeug bzw. Zugsegment, mehrere Schienenfahrzeuge bzw. Zugsemente oder alle Schienenfahrzeuge bzw. Zugsegmente des Triebzugs jeweils über einen Antriebstrang verfügen.

Die Erfindung wird nachfolgend anhand der beigefügten Figuren beispielhaft näher erläutert. Dabei zeigen
- Figur 1: eine schematische Darstellung eines erfindungsgemäßen Antriebstrangs,
- Figur 2: eine Seitenansicht von der Antriebsseite einer Ausführung eines erfindungsgemäßen Getriebes,
- Figur 3: eine Schnittdarstellung des Getriebes entlang der Schnittlinie A - A aus Fig. 2 und
- Figur 4: eine perspektivische Ansicht auf ein erfindungsgemäßes Getriebe.

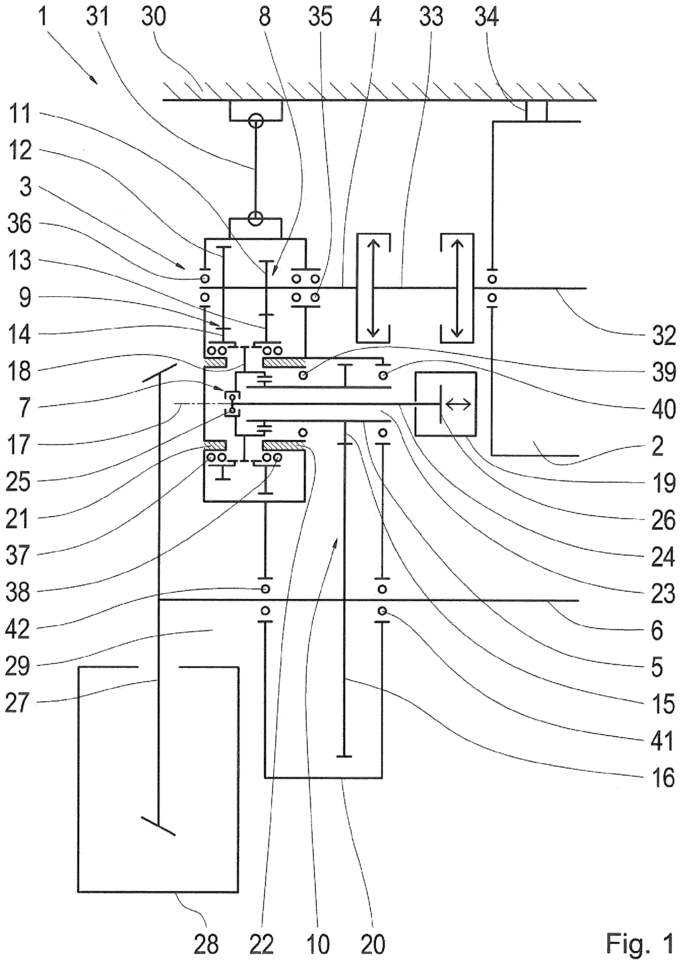

Der in Fig. 1 dargestellte Antriebsstrang 1 eines Schienenfahrzeugs besteht im Wesentlichen aus einem elektrischen Antriebsmotor 2, dessen Motorabtriebswelle 32 über eine kardanische Wellenkupplung 33 mit der Eingangswelle 4 des Getriebes 3 verbunden ist. Des Weiteren gehört die Abtriebswelle 6 des Getriebes 3 zum Antriebsstrang 1, wobei die Abtriebswelle 6 als Radsatzwelle ausgebildet ist, auf deren beiden Endbereichen jeweils eine Radscheibe 27 befestigt ist. Der Übersichtlichkeit halber ist in Fig. 1 nur eine Radscheibe 27 gezeichnet.

Der Antriebsmotor kann beispielsweise als Asynchronmotor ausgebildet sein und ist über eine Motorstütze 34 starr mit einem Fahrzeugrahmen 30 des Schienenfahrzeugs verbunden. Der Fahrzeugrahmen 30 kann beispielsweise ein Fahrgestell sein. Als kardanische Kupplung 33 eignen sich neben der symbolisch dargestellten Bogenzahnkupplung auch Wellenkupplungen mit elastischen Elementen, wie armierte Gummilaschen oder Gummischeiben, die einen gewissen Winkel-, Radial- und/oder Axialversatz der zu verbindenden Wellenenden erlauben. Die Eingangswelle 4 ist mittels zweier Wälzlager 35 und 36 in einem Gehäuse 20 des Getriebes 3 gelagert.

Das Getriebe 3 stützt sich über die Wälzlager 41 und 42 einerseits auf der Radsatzwelle bzw. Abtriebswelle 6 ab. Daneben stützt sich das Getriebe 3 über eine Drehmomentstütze 31 beweglich gegenüber dem Fahrzeugrahmen 30 ab. Eine derartige Anordnung bzw. Aufhängung des Antriebsstranges im Schienenfahrzeug wird auch teilabgefederter Antrieb genannt, weil ein Teil der Massen des Antriebstrangs, nämlich der Antriebsmotor 2, fest mit dem gefederten Fahrzeugrahmen 30 verbunden ist und ein anderer Teil der Massen des Antriebstrangs, nämlich das Getriebe 3, sich im Wesentlichen auf der ungefederten Radsatzwelle abstützt.

An der Radscheibe 27 ist eine Radscheibenbremse 28 angeordnet. Die motorseitige Anordnung der Abtriebsstufe in Form des dritten Stirnradpaares 10 ergibt sich auf der Außenseite des Getriebes 3 eine Ausnehmung 29 in der die Radscheibenbremse 28 zumindest teilweise angeordnet ist. Mit anderen Worten ist die Radscheibenbremse 28 in axialer und in radialer Richtung teilweise im Bereich der maximalen projizierten Abmessungen des Gehäuses 20 des Getriebes 3 angeordnet. Dadurch wird der begrenzte Bauraum im Unterbau des Schienenfahrzeuges sehr vorteilhaft ausgenutzt.

In dem Gehäuse 20 des Getriebes 3 sind drei Stirnradpaare 8, 9 und 10 angeordnet. Das erste Stirnradpaar 8 besteht aus einem ersten Stirnrad 11 und aus einem dritten Stirnrad 13. Das erste Stirnrad 11 ist dabei als Festrad verdrehfest auf der Eingangswelle 4 angeordnet. Das dritte Stirnrad 13 ist dauernd im Eingriff mit dem ersten Stirnrad 11. Das dritte Stirnrad 13 ist als Losrad ausgebildet und mittels eines Wälzlagers 38 rotierbar um eine Zwischenwellenachse 17 auf einem Lagerstutzen 22 des Gehäuses 20 gelagert.

Das zweite Stirnradpaar 9 besteht aus einem zweiten Stirnrad 12 und aus einem vierten Stirnrad 14. Das zweite Stirnrad 12 ist dabei als Festrad verdrehfest auf der Eingangswelle 4 angeordnet. Das vierte Stirnrad 14 ist dauernd im Eingriff mit dem zweiten Stirnrad 12. Das vierte Stirnrad 14 ist als Losrad ausgebildet und mittels eines Wälzlagers 37 rotierbar um eine Zwischenwellenachse 17 auf einem Lagerstutzen 21 des Gehäuses 20 gelagert.

Das erste Stirnradpaar 8 bildet eine erste Übersetzungsstufe, die als Anfahrgang genutzt werden kann. Das zweite Stirnradpaar 9 bildet eine zweite Übersetzungsstufe, die bei höheren Geschwindigkeiten genutzt wird.

Eine Zwischenwelle 5 ist in dem Getriebegehäuse 20 mittels zweier weiterer Wälzlager 39 und 40 rotierbar um die Zwischenwellenachse 17 gelagert. Die Zwischenwelle 5 ist als Hohlwelle mit einer Bohrung 23 ausgebildet. Die Bohrung 23 ist koaxial zur Zwischenwellenachse 17 ausgeführt und durchdringt die Zwischenwelle 5 vollständig.

Verdrehfest mit der Zwischenwelle 5 verbunden ist ein fünftes Stirnrad 15. Das fünfte Stirnrad 15 ist dauernd im Eingriff mit einem sechsten Stirnrad 16, das verdrehfest auf der Abtriebswelle 6 befestigt ist. Zusammen bilden das fünfte und das sechste Stirnrad 15 und 16 ein drittes Stirnradpaar 10, welches wiederum die Abtriebsstufe des Getriebes 3 bildet. Das sechste Stirnrad 16 kann somit als Teil des Radsatzes angesehen werden, der im Wesentlichen aus der Abtriebs- bzw. Radsatzwelle 6, den Radscheiben 27 und dem sechsten Stirnrad 16 besteht. Die Abtriebswelle 6 bzw. Radsatzwelle ist mittels der Wälzlager 41 und 42 in dem Gehäuse 20 gelagert.

Zum Umschalten des Getriebes von der ersten Übersetzungsstufe in die zweite Übersetzungsstufe und umgekehrt ist eine Schalteinrichtung 7 vorgesehen. Mit der Schalteinrichtung 7 kann auch eine Neutralstellung eingelegt werden, in der das zweite und das vierte Stirnrad frei rotierbar gegenüber der Zwischenwelle angeordnet sind, sodass der Kraftfluss zwischen der Eingangswelle und der Abtriebswelle unterbrochen ist. In der Fig. 1 ist die Schalteinrichtung 7 in der Neutralstellung dargestellt.

Die Schalteinrichtung 7 umfasst ein Schaltglied 18, das durch die Bohrung 23 in der Zwischenwelle 5 hindurch betätigbar ist. Das Schaltglied 18 ist in Form einer gegenüber der Zwischenwelle 5 verdrehfest, aber axial verschiebbar auf der Zwischenwelle 5 gelagerten Schiebemuffe ausgebildet. Zum Verschieben des Schaltgliedes 18 auf der Zwischenwelle 5 weist das Schaltglied 18 an seinem radial innenliegenden Bereich eine Innenverzahnung auf, die auf einer Außenverzahnung der Zwischenwelle 5 hin und her gleiten kann. Am Außenumfang weist das Schaltglied 18 eine Außenverzahnung auf, welche durch axiales Verschieben entweder mit einer Innenverzahnung des dritten Stirnrades 13 oder mit einer Innenverzahnung des vierten Stirnrades 14 in Eingriff gebracht werden kann, wodurch der Kraftfluss mit dem jeweiligen Übersetzungsverhältnis übertragen wird. In der in Fig. 1 dargestellten Neutralstellung befindet sich das Schaltglied 18 in einer mittleren Position, in der die Außenverzahnung des Schaltgliedes 18 mit keiner der Innenverzahnungen der beiden Losräder bzw. Stirnräder 13 oder 14 im Eingriff ist, wodurch der Kraftfluss von der Eingangswelle 4 zur Abtriebswelle 6 unterbrochen ist.

Die axialen Schaltbewegungen des Schaltgliedes 18 sind durch einen Aktuator 19 steuerbar, der beispielsweise an dem Getriebegehäuse 20 befestigt ist. Der Aktuator 19 ist über eine axialbeweglich durch die Bohrung 23 der Zwischenwelle 5 hindurchgeführte Schaltstange 24 mit dem Schaltglied 18 verbunden. An ihrem dem Aktuator 19 abgewandten Ende ist die Schaltstange 24 über ein Axiallager 25 mit dem Schaltglied 18 verbunden. Das Axiallager 25 ist notwendig, um die Schaltstange 24 von der Rotationsbewegung des Schaltgliedes 18 zu entkoppeln. Das Schaltglied 18 rotiert im Betrieb mit der Zwischenwelle 5, wogegen die Schaltstange 24 verdrehfest mit dem axialbeweglichen Teil des gehäusefesten Aktuators 19 verbunden ist.

Der Aktuator 19 ist in der vorliegenden Ausführung als druckluftbetätigte Zylinder-Kolben-Einheit ausgeführt. Der bewegliche Kolben 26 ist mit der Schaltstange 24 verbunden. Es ist auch denkbar den Kolben 26 und die Schaltstange 24 einteilig auszuführen.

Der Aktuator 19 ist dabei so in der Umgebung der Wellenkupplung 33 angeordnet, dass die rotierende Wellenkupplung 33 im Betrieb eine Luftströmung im Bereich des Aktuators 19 erzeugt, sodass der Aktuator 19 durch die Luftströmung gekühlt wird.

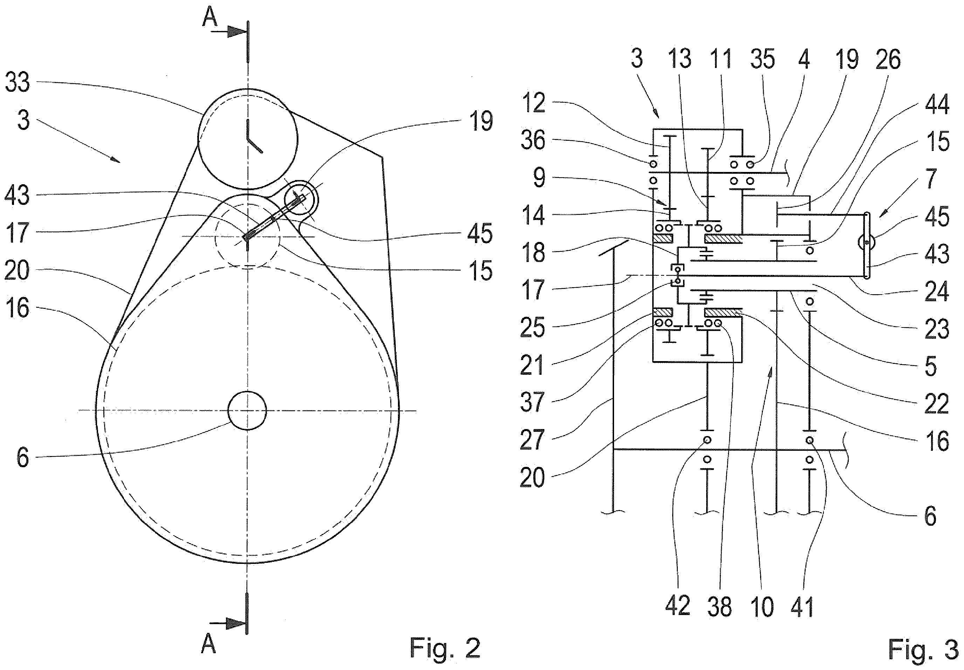

Das in Fig. 2 und Fig. 3 dargestellte Getriebe 3 entspricht dem Getriebe 3 aus Fig. 1 mit Ausnahme der Anordnung des Aktuators 19 und den daraus folgenden Modifikationen an der Schalteinrichtung 7. Daher sind in den Figuren dieselben Bauteile mit denselben Bezugszeichen versehen. Im Folgenden werden vor allem die von der Ausführung gemäß Fig. 1 abweichenden Merkmale gemäß Fig. 2 und 3 beschrieben.

In der Seitenansicht des Getriebes 3 in Fig. 2 ist die antriebsseitige Wellenkupplung 33 im oberen Bereich des Getriebes 3 schematisch dargestellt. Darunter sind die außen an dem Gehäuse 20 angeordneten Elemente der Schalteinrichtung 7 sichtbar.

Im unteren Teil des Getriebes 3 ist die abgeschnitten gezeichnete Abtriebswelle 6 angeordnet. Mit jeweils einer Strichlinie ist das verdrehfest auf der Zwischenwelle 5 angeordnete fünfte Stirnrad 15 und das verdrehfest auf der Abtriebswelle 6 angeordnete sechste Stirnrad 16 dargestellt.

Des Weiteren sind von der Schalteinrichtung 7 der Aktuator 19 und ein Kipphebel 43 erkennbar, der um einen Drehpunkt 45 schwenkbar angeordnet ist. Die Funktion des Kipphebels 43 wird in Folgenden zur Fig. 3 noch näher erläutert.

Die Fig. 3 zeigt eine Schnittdarstellung des Getriebes 3 aus der Fig. 2 mit der Radsatzwelle bzw. Abtriebswelle 6 und einer darauf befestigten Radscheibe 27. Der Aktuator 19 ist in dieser Ausführungsform platzsparend an der Außenseite des Gehäuses 20 parallel zu der Schaltstange 24 befestigt. Auch hier ist der Aktuator 19 als Zylinder-Kolben-Einheit ausgeführt, wobei eine mit dem axialbeweglichen Kolben 26 der Zylinder-Kolben-Einheit verbundene Kolbenstange 44 über einen Kipphebel 43 mit der Schaltstange 24 verbunden ist. Der Kipphebel 43 ist schwenkbar um einen gehäusefesten Drehpunkt 45 angeordnet. Bei dieser Ausführung kann der Zylinder der Zylinder-Kolben-Einheit 19 auch in dem Gehäuse 20 integriert bzw. einteilig mit dem Gehäuse 20 ausgeführt sein.

Diese Anordnung des Aktuators 19 wird vorteilhaft dann gewählt, wenn der Abstand zwischen dem Getriebe 3 und dem Antriebsmotor 2 sehr gering ist, sodass eine Anordnung des Aktuators 19 wie in Fig. 1 keinen Platz findet.

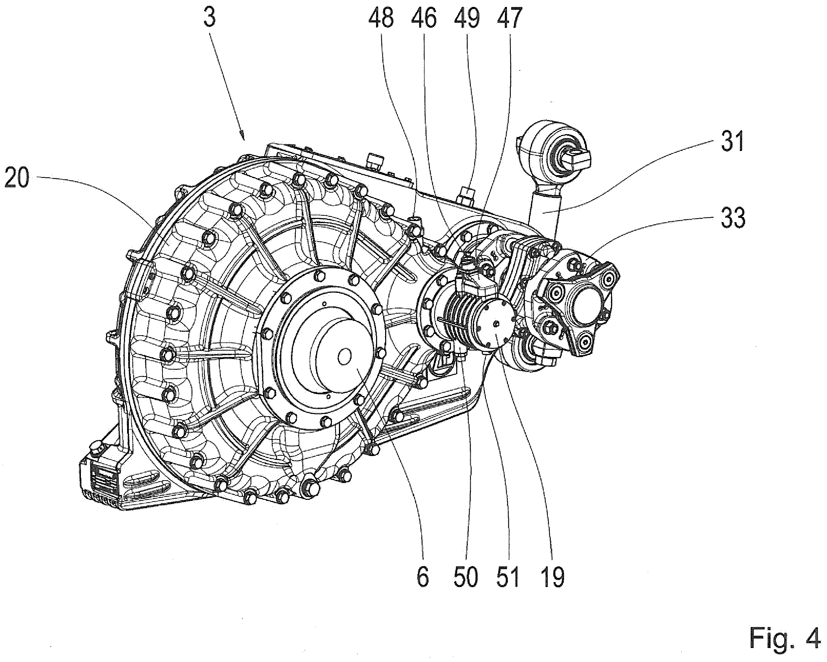

Die Fig. 4 zeigt schließlich eine konstruktive Ausgestaltung des in der Fig. 1 schematisch dargestellten Getriebes 3. In der perspektivischen Ansicht der Fig.4 wird die kompakte, platzsparende Ausführung des Getriebes 3 erkennbar. Das als schaltbares Radsatzgetriebe ausgeführte Getriebe 3 benötigt keinen größeren Bauraum als ein nichtschaltbares Radsatzgetriebe mit zwei Übersetzungsstufen wie es eingangs beschrieben wurde, sodass das erfindungsgemäße Getriebe 3 auch in bestehenden Schienenfahrzeugen ohne großen Aufwand gegen ein herkömmliches Getriebe austauschbar ist.

Das Getriebe 3 stützt sich an dem antriebsseitigen Ende des Gehäuses 20 über die Drehmomentstütze 31 an einem Fahrzeugrahmen oder dem Drehgestell des Schienenfahrzeuges ab. Daneben stützt sich das Getriebe 3 über die Lager der Abtriebswelle 6 direkt auf der Radsatzwelle ab. Daher wird ein solches Getriebe auch achsreitendes Getriebe genannt.

Von der Schalteinheit 7 ragt lediglich der Zylinder des als Zylinder-Kolben-Einheit ausgeführten Aktuators 19 aus dem Gehäuse 20 seitlich heraus. Der Zylinder ist parallel zu der Wellenkupplung 33 in deren Umgebung angeordnet, sodass bei rotierender Wellenkupplung 33 ein Luftstrom von der Wellenkupplung erzeugt wird, der den daneben angeordneten Zylinder des Aktuators 19 kühlt. An dem Aktuator 19 ist ein Wegsensor 47 angeordnet. Dieser Wegsensor 47 erfasst im Betrieb die aktuelle Position des Kolbens der Zylinder-Kolben-Einheit 19 und damit die Position des Schaltgliedes 18. Insbesondere in Verbindung mit einer klauengeschalteten Schalteinheit ist es wichtig die exakte Position des Schaltgliedes 18 während eines Schaltvorgangs zu kennen, um ein möglichst ruckfreies und zügiges Schalten zu ermöglichen. Die Signale des Positionssensors 47 werden über einen Anschluss 46 an eine nicht dargestellte Getriebesteuerung und/oder das Zugsteuergerät geleitet, welches die Schaltvorgänge des Getriebes 3 steuert. Der Anschluss 46 kann beispielsweise als Steckverbindung ausgeführt sein.

Das Getriebe 3 umfasst auch jeweils einen Drehzahlsensor zur Erfassung der Drehzahlen der Eingangswelle 4 und der Zwischenwelle 5. Die Signale der Drehzahlsensoren werden über die Anschlüsse 48 und 49 an die Getriebesteuerung und/oder das Zugsteuergerät geleitet und stehen so zur Steuerung der Schaltvorgänge des Getriebes 3 zur Verfügung. Auch die Anschlüsse 48 und 49 können beispielsweise jeweils als Steckverbindung ausgeführt werden.

Zur Versorgung des als Zylinder-Kolben-Einheit ausgeführten Aktuators 19 mit Druckluft weist der Aktuator 19 zwei Druckluftanschlüsse 50 und 51 auf. Über diese Druckluftanschlüsse 50 und 51 ist der Aktuator 19 beispielsweise mit einem Ventilblock verbunden, welcher wiederum von der Getriebesteuerung und/oder dem Zugsteuergerät zum Zwecke der Steuerung der Schaltvorgänge in dem Getriebe 3 ansteuerbar ist.

### Bezugszeichen

- 1: Antriebsstrang
- 2: Antriebsmotor
- 3: Getriebe
- 4: Eingangswelle
- 5: Zwischenwelle
- 6: Abtriebswelle
- 7: Schalteinrichtung
- 8: erstes Stirnradpaar
- 9: zweites Stirnradpaar
- 10: drittes Stirnradpaar
- 11: erstes Stirnrad
- 12: zweites Stirnrad
- 13: drittes Stirnrad
- 14: viertes Stirnrad
- 15: fünftes Stirnrad
- 16: sechstes Stirnrad
- 17: Zwischenwellenachse
- 18: Schaltglied
- 19: Aktuator
- 20: Gehäuse
- 21: Lagerstutzen
- 22: Lagerstutzen
- 23: Bohrung
- 24: Schaltstange
- 25: Axiallager
- 26: Kolben
- 27: Radscheibe
- 28: Radscheibenbremse
- 29: Ausnehmung
- 30: Fahrzeugrahmen
- 31: Drehmomentstütze
- 32: Motorabtriebswelle
- 33: Wellenkupplung
- 34: Motorstütze
- 35: Wälzlager
- 36: Wälzlager
- 37: Wälzlager
- 38: Wälzlager
- 39: Wälzlager
- 40: Wälzlager
- 41: Wälzlager
- 42: Wälzlager
- 43: Kipphebel
- 44: Kolbenstange
- 45: Drehpunkt
- 46: Anschluss
- 47: Positionssensor
- 48: Anschluss
- 49: Anschluss
- 50: Druckluftanschluss
- 51: Druckluftanschluss

## Patentansprüche

1. Radsatzgetriebe für den Antriebsstrang (1) eines Schienenfahrzeugs, wobei das Radsatzgetriebe (3) eine Eingangswelle (4), eine Zwischenwelle (5) und eine Abtriebswelle (6) aufweist, wobei die Eingangswelle (4) antriebswirksam mit einem Antriebsmotor (2) verbindbar ist, wobei das Radsatzgetriebe (3) zumindest zwei wahlweise schaltbare Übersetzungsstufen mit unterschiedlichen Übersetzungsverhältnissen für dieselbe Fahrtrichtung und eine Schalteinrichtung (7) zum Schalten der Übersetzungsstufen aufweist, wobei die beiden Übersetzungsstufen als ein erstes Stirnradpaar (8) mit einem ersten Stirnrad (11) und einem dritten Stirnrad (13) und als ein zweites Stirnradpaar (9) mit einem zweiten Stirnrad (12) und einem vierten Stirnrad (14) ausgebildet sind, wobei das erste und das zweite Stirnrad (11, 12) jeweils verdrehfest auf der Eingangswelle (4) und wobei das dritte und das vierte Stirnrad (13, 14) jeweils rotierbar um eine Zwischenwellenachse (17) angeordnet sind, und wobei das dritte und das vierte Stirnrad (13, 14) in einem Gehäuse (20) des Radsatzgetriebes (3) auf jeweils einem gehäusefesten Lagerstutzen (21, 22) rotierbar gelagert sind.

2. Radsatzgetriebe nach Anspruch 1, **dadurch gekennzeichnet, dass** die Schalteinrichtung (7) ein verdrehfest und axialverschiebbar in Bezug auf die Zwischenwelle (5) gelagertes Schaltglied (18) umfasst, das durch einen Aktuator (19) der Schalteinrichtung (7) derart axial verschiebbar ist, dass wahlweise das dritte Stirnrad (11) oder das vierte Stirnrad (13) verdrehfest mit der Zwischenwelle (5) verbindbar ist.

3. Radsatzgetriebe nach Anspruch 1 oder 2, **dadurch gekennzeichnet, dass** die Schalteinrichtung (7) eine Neutralstellung aufweist, in der das dritte und das vierte Stirnrad (13, 14) frei rotierbar gegenüber der Zwischenwelle (5) angeordnet sind, sodass der Kraftfluss zwischen der Eingangswelle (4) und der Abtriebswelle (6) unterbrochen ist.

4. Radsatzgetriebe nach Anspruch 2 oder 3, **dadurch gekennzeichnet, dass** die Zwischenwelle (5) als Hohlwelle mit einer axialen Bohrung (23) ausgebildet ist, und dass das Schaltglied (18) durch die Bohrung (23) hindurch betätigbar ist.

5. Radsatzgetriebe nach Anspruch 4, **dadurch gekennzeichnet, dass** der Aktuator an dem Gehäuse (20) befestigt ist und über eine axialbeweglich durch die Bohrung (23) der Zwischenwelle (5) hindurchgeführte Schaltstange (24) mit dem Schaltglied (18) verbunden ist.

6. Radsatzgetriebe nach Anspruch 5, **dadurch gekennzeichnet, dass** der Aktuator als Zylinder-Kolben-Einheit ausgeführt ist, deren beweglicher Kolben mit der Schaltstange verbunden ist.

7. Radsatzgetriebe nach Anspruch 4, **dadurch gekennzeichnet, dass** der Aktuator fest mit der Zwischenwelle (5) verbunden ist und zumindest teilweise in der Bohrung (23) der Zwischenwelle (5) angeordnet ist.

8. Radsatzgetriebe nach einem der Ansprüche 1 bis 7, **dadurch gekennzeichnet, dass** eine Abtriebsstufe als drittes Stirnradpaar (10) ausgebildet ist, mit einem fünften Stirnrad (15), das verdrehfest auf der Zwischenwelle (5) angeordnet ist, und mit einem sechsten Stirnrad (16), das verdrehfest auf der Abtriebswelle (6) angeordnet ist, und dass das dritte Stirnradpaar (10) in Bezug auf das erste und das zweite Stirnradpaar (8, 9) auf der dem Antriebsmotor (2) zugewandten Seite des Radsatzgetriebes (3) angeordnet ist.

9. Antriebsstrang für ein Schienenfahrzeug mit einem elektrischen Antriebsmotor (2) der über eine Wellenkupplung (33) antriebswirksam mit einer Eingangswelle (4) eines Radsatzgetriebes (3) verbunden ist, wobei das Radsatzgetriebe (3) die Eingangswelle (4), eine Zwischenwelle (5) und eine Abtriebswelle (6) aufweist, wobei die Abtriebswelle (6) als Radsatzwelle ausgeführt ist oder über eine federnde Komponente mit der Radsatzwelle verbunden ist, und wobei das Radsatzgetriebe (3) zumindest zwei wahlweise schaltbare Übersetzungsstufen mit unterschiedlichen Übersetzungsverhältnissen für dieselbe Fahrtrichtung und eine Schalteinrichtung (7) zum Schalten der Übersetzungsstufen aufweist, **dadurch gekennzeichnet, dass** ein Aktuator (19) der Schalteinrichtung (7) derart in der Umgebung der Wellenkupplung (33) angeordnet ist, dass die rotierende Wellenkupplung (33) im Betrieb eine Luftströmung im Bereich des Aktuators (19) erzeugt, sodass der Aktuator (19) durch die Luftströmung gekühlt wird.

10. Antriebsstrang nach Anspruch 9, **dadurch gekennzeichnet, dass** die federnde Komponente eine kardanische Kupplung umfasst.

11. Antriebsstrang nach einem der Ansprüche 9 bis 10, **gekennzeichnet durch** eine Radscheibenbremse (28), die im Bereich einer Radscheibe (27) angeordnet ist und in axialer und in radialer Richtung zumindest teilweise im Bereich der maximalen projizierten Abmessungen des Gehäuses (20) des Radsatzgetriebes (3) angeordnet ist.

## Claims

1. Gear set mechanism for the drive train (1) of a rail vehicle, the gear set mechanism (3) having an input shaft (4), an intermediate shaft (5) and an output shaft (6), it being possible for the input shaft (4) to be drive-connected to a drive motor (2), the gear set mechanism (3) having at least two optionally selectable transmission stages with different transmission ratios for the same driving direction and a selecting device (7) for selecting the transmission stages, the two transmission stages being configured as a first spur gear pair (8) with a first spur gear (11) and a third spur gear (13) and as a second spur gear pair (9) with a second spur gear (12) and a fourth spur gear (14), the first and the second spur gear (11, 12) being arranged in each case fixedly on the input shaft (4) so as to rotate with it, and the third and the fourth spur gear (13, 14) being arranged in each case such that they can be rotated about an intermediate shaft axis (17), and the third and the fourth spur gear (13, 14) being mounted in a housing (20) of the gear set mechanism (3) such that they can be rotated on in each case one bearing stub (21, 22) which is fixed on the housing.

2. Gear set mechanism according to Claim 1, **characterized in that** the selecting device (7) comprises a selecting member (18) which is mounted axially displaceably in relation to and fixedly so as to rotate with the intermediate shaft (5), which selecting member (18) can be displaced axially by way of an actuator (19) of the selecting device (7) in such a way that the third spur gear (11) or the fourth spur gear (13) can optionally be connected fixedly to the intermediate shaft (5) so as to rotate with it.

3. Gear set mechanism according to Claim 1 or 2, **characterized in that** the selecting device (7) has a neutral position, in which the third and the fourth spur gear (13, 14) are arranged such that they can be rotated freely with respect to the intermediate shaft (5), with the result that the flow of power between the input shaft (4) and the output shaft (6) is interrupted.

4. Gear set mechanism according to Claim 2 or 3, **characterized in that** the intermediate shaft (5) is configured as a hollow shaft with an axial bore (23), and **in that** the selecting member (18) can be actuated through the bore (23).

5. Gear set mechanism according to Claim 4, **characterized in that** the actuator is fastened to the housing (20) and is connected to the selecting member (18) via a selector rod (24) which is guided in an axially movable manner through the bore (23) of the intermediate shaft (5).

6. Gear set mechanism according to Claim 5, **characterized in that** the actuator is configured as a cylinder/piston unit, the movable piston of which is connected to the selector rod.

7. Gear set mechanism according to Claim 4, **characterized in that** the actuator is connected fixedly to the intermediate shaft (5) and is arranged at least partially in the bore (23) of the intermediate shaft (5) .

8. Gear set mechanism according to one of Claims 1 to 7, **characterized in that** an output stage is configured as a third spur gear pair (10), with a fifth spur gear (15) which is arranged fixedly on the intermediate shaft (5) so as to rotate with it, and with a sixth spur gear (16) which is arranged fixedly on the output shaft (6) so as to rotate with it, and **in that**, in relation to the first and the second spur gear pair (8, 9), the third spur gear pair (10) is arranged on that side of the gear set mechanism (3) which faces the drive motor (2).

9. Drive train for a rail vehicle having an electric drive motor (2) which is drive-connected via a shaft coupling (33) to an input shaft (4) of a gear set mechanism (3), the gear set mechanism (3) having the input shaft (4), an intermediate shaft (5) and an output shaft (6), the output shaft (6) being configured as a gear set shaft or being connected via a resilient component to the gear set shaft, and the gear set mechanism (3) having at least two optionally selectable transmission stages with different transmission ratios for the same driving direction and a selecting device (7) for selecting the transmission stages, **characterized in that** an actuator (19) of the selecting device (7) is arranged in the surrounding area of the shaft coupling (33) in such a way that the rotating shaft coupling (33) generates an air flow in the region of the actuator (19) during operation, with the result that the actuator (19) is cooled by way of the air flow.

10. Drive train according to Claim 9, **characterized in that** the resilient component comprises a cardanic coupling.

11. Drive train according to either of Claims 9 and 10, **characterized by** a wheel disc brake (28) which is arranged in the region of a wheel disc (27) and is arranged in the axial direction and in the radial direction at least partially in the region of the maximum projected dimensions of the housing (20) of the gear set mechanism (3).

## Revendications

1. Transmission d'essieu pour la chaîne cinématique (1) d'un véhicule ferroviaire, dans laquelle la transmission d'essieu (3) comporte un arbre d'entrée (4), un arbre intermédiaire (5) et un arbre de sortie (6), dans laquelle l'arbre d'entrée (4) peut être relié pour entraînement à un moteur d'entraînement (2), dans laquelle la transmission d'essieu (3) comporte au moins deux étages de transmission à enclenchement sélectif dotés de différents rapports de transmission pour la même direction du déplacement et un dispositif d'enclenchement (7) pour l'enclenchement des étages de transmission,
dans laquelle les deux étages de transmission sont conçus comme une première paire d'engrenages (8) avec un premier engrenage (11) et un troisième engrenage (13) et comme une deuxième paire d'engrenages (9) avec un deuxième engrenage (12) et un quatrième engrenage (14), dans laquelle le premier et le deuxième engrenage (11, 12) sont chacun agencés fixes en rotation sur l'arbre d'entrée (4) et dans laquelle le troisième et le quatrième engrenage (13, 14) sont chacun agencés pour être en rotation autour d'un axe d'arbre intermédiaire (17), et dans laquelle le troisième et le quatrième engrenage (13, 14) sont chacun disposés dans un boîtier (20) de la transmission d'essieu (3) pour être en rotation sur un manchon de palier (21, 22) respectif solidaire du boîtier.

2. Transmission d'essieu selon la revendication 1, **caractérisée en ce que** le dispositif d'enclenchement (7) comprend un élément de commutation (18) disposé fixe en rotation et coulissant axialement par rapport à l'arbre intermédiaire (5), cet élément pouvant coulisser axialement par le biais d'un actionneur (19) du dispositif d'enclenchement (7) de telle sorte que le troisième engrenage (11) ou le quatrième engrenage (13) peut être sélectivement relié à l'arbre intermédiaire (5) de manière fixe en rotation.

3. Transmission d'essieu selon la revendication 1 ou 2, **caractérisée en ce que** le dispositif d'enclenchement (7) comprend un réglage neutre, où le troisième et le quatrième engrenage (13, 14) sont agencés pour être en rotation libre à l'égard de l'arbre intermédiaire (5), de sorte que le flux de force entre l'arbre d'entrée (4) et l'arbre de sortie (6) est interrompu.

4. Transmission d'essieu selon la revendication 2 ou 3, **caractérisée en ce que** l'arbre intermédiaire (5) est conçu comme un arbre creux doté d'un alésage axial (23), et **en ce que** l'élément de commutation (18) est actionnable au travers de l'alésage (23).

5. Transmission d'essieu selon la revendication 4, **caractérisée en ce que** l'actionneur peut être fixé au boîtier (20) et est relié à l'élément de commutation (18) par le biais d'une tige de commande (24) axialement mobile et passant au travers de l'alésage (23) de l'arbre intermédiaire (5).

6. Transmission d'essieu selon la revendication 5, **caractérisée en ce que** l'actionneur est réalisé comme unité piston-cylindre, dont le piston mobile est relié à la tige de commande.

7. Transmission d'essieu selon la revendication 4, **caractérisée en ce que** l'actionneur est relié de manière fixe à l'arbre intermédiaire (5) et est agencé au moins partiellement dans l'alésage (23) de l'arbre intermédiaire (5).

8. Transmission d'essieu selon l'une des revendications 1 à 7, **caractérisée en ce qu'**un étage de sortie est conçu comme troisième paire d'engrenages (10), avec un cinquième engrenage (15) agencé fixe en rotation sur l'arbre intermédiaire (5), et avec un sixième engrenage (16) agencé fixe en rotation sur l'arbre de sortie (6), et **en ce que** la troisième paire d'engrenages (10) est agencée en relation à la première et la deuxième paire d'engrenages (8, 9) est agencée sur le côté de la transmission d'essieu (3) faisant face au moteur d'entraînement (2).

9. Chaîne cinématique pour un véhicule ferroviaire, dotée d'un moteur d'entraînement (2) électrique relié pour entraînement à un arbre d'entrée (4) d'une transmission d'essieu (3) par le biais d'un accouplement d'arbres (33), dans laquelle la transmission d'essieu (3) comporte l'arbre d'entrée (4), un arbre intermédiaire (5) et un arbre de sortie (6), dans laquelle l'arbre de sortie (6) est réalisé comme arbre d'essieu ou est relié à l'arbre d'essieu au moyen d'un composant élastique, et dans laquelle la transmission d'essieu (3) comporte au moins deux étages de transmission à enclenchement sélectif dotés de différents rapports de transmission pour la même direction du déplacement et un dispositif d'enclenchement (7) pour l'enclenchement des étages de transmission, **caractérisée en ce qu'**un actionneur (19) du dispositif d'enclenchement (7) est agencé à proximité de l'accouplement d'arbres (33) de telle sorte que l'accouplement d'arbres (33) en rotation produit en fonctionnement un écoulement d'air dans la zone de l'actionneur (19), de sorte que l'actionneur (19) est refroidi par l'écoulement d'air.

10. Chaîne cinématique selon la revendication 9, **caractérisée en ce que** le composant élastique comprend un couplage à cardans.

11. Chaîne cinématique selon l'une des revendications 9 et 10, **caractérisée par** un frein à disque (28) agencé dans la zone d'un disque de roue (27) et agencé au moins partiellement dans la zone des dimensions maximales projetées dans les directions axiales et radiales du boîtier (20) de la transmission d'essieu (3).
